# EUROPEAN PATENT SPECIFICATION

(11) **EP 3 471 970 B1**
(45) Date of publication and mention of the grant of the patent: **13.05.2020**
(21) Application number: 17731796.3
(22) Date of filing: 15.06.2017
(51) Int. Cl.: B60C 1/00, B60C 11/00, B60C 11/03, B60C 11/12, C08L 9/00, C08K 3/36, C08K 5/00

(54) **TRUCK TIRE TREAD**
LAUFSTREIFEN FÜR LUFTREIFEN FÜR LKW
BANDE DE ROULEMENT DE PNEU POUR VÉHICULE POIDS LOURDS

(30) Priority: 17.06.2016 WO PCT/US2016/038022
(43) Date of publication of application: 24.04.2019
(73) Proprietor: COMPAGNIE GENERALE DES ETABLISSEMENTS MICHELIN, 63000 Clermont-Ferrand (FR)
(72) Inventor: VAUTARD, Frederic, Greenville, SC 29605 (US); KHRIPIN, Constantine, Greenville, SC 29605 (US); VOSS, Stefan, Greenville, SC 29605 (US); WILSON, Clifford, Greenville, SC 29605 (US)
(74) Representative: Casalonga
(86) International application number: PCT/US2017/037606
(87) International publication number: WO 2017/218733

(56) References cited:
- EP-A1- 1 207 057
- WO-A1-2014/179806
- WO-A1-2016/083255
- FR-A1- 2 548 097
- JP-A- 2005 193 770
- US-A1- 2013 206 296
- US-A1- 2014 110 025
- US-A1- 2015 283 854

## Description

### BACKGROUND OF THE INVENTION

### Field of the Invention

This invention relates generally to truck tire treads and more specifically, to materials that are useful for manufacturing tire treads for heavy trucks and the structure of such treads.

### Description of the Related Art

Tire treads generally extend about the outer circumference of a tire to operate as the intermediary between the tire and a surface upon which it travels (the operating surface). Contact between the tire tread and the operating surface occurs along a footprint of the tire. Tire treads provide grip to resist tire slip that may result during tire acceleration, braking, and/or cornering. Tire treads may also include tread elements, such as ribs or lugs, and tread features, such as grooves and sipes, each of which may assist in providing target tire performance when a tire is operating under particular conditions.

Tire designers seek ways to improve the performance of their tires so that new and improved products can be provided to meet the needs of the transportation industry. Particularly desirable improvements include those that provide improved rolling resistance, which translates into improved fuel economy, and those that provide improved wear, improved irregular wear and improved traction.

Irregular wear is a localized wear on just a portion of a tire tread rather than wear that occurs evenly across the entire surface of the tread. It is often associated with free-rolling tires, *e.g*., tires in the steer and trailer positions, particularly in the long-haul truck industry segment. When irregular wear becomes severe, the tire has to be removed prematurely even though there is adequate tread depth remaining on much of the rest of the tread. Irregular wear typically starts at the edges of the circumferential ribs that are important for wet traction performance of the tire.

It is known in the tire industry that tire designers must often compromise on certain characteristics of the tires they are designing. Changing a tire design to improve one characteristic of the tire will often result in a compromise; *i.e.,* an offsetting decline in another characteristic. Tire designers and those conducting research in the tire industry search for materials and tire structures and combinations of materials and tire structures that can break some of these compromises.

### SUMMARY OF THE INVENTION

Particular embodiments of the present invention include heavy truck tire treads and tires having such treads. The heavy truck tire treads have a longitudinal direction, a transverse direction, a thickness direction, and a ground-engaging surface and include a series of at least 50 similar tread features repeated along its longitudinal direction.

These similar tread features include two ducts extending from the ground-engaging surface in the thickness direction, the ducts being apart one from the other and having a duct section area of at least 10 mm² and a length of between 50% and 100% of a thickness of the tread. They further include one void being in fluid communication with the two ducts, the void extending substantially parallel to the ground-engaging surface of the tread and at a distance therefrom and having a void section area of at least 10 mm².

Additionally the similar tread features include one sipe joining the two ducts and the void, wherein the tread feature is otherwise blind.

In particular embodiments the heavy truck tire tread is formed at least in part of a rubber composition that is based upon a cross-linkable elastomer composition, the cross-linkable rubber composition comprising, per 100 parts by weight of rubber (phr) at least 75 phr of a first rubber component selected from a polybutadiene rubber (BR), a styrene-butadiene rubber (SBR) or combinations thereof having a Tg of between -80 °C and -110 °C. The rubber composition further includes between 0 phr and 25 phr of a secondary rubber component that is a diene elastomer, at least 40 phr of a plasticizing resin having a Tg of at least 25° C, and a reinforcing filler.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. **1** is a top view of a portion of a truck tire tread in accordance with the known prior art.
FIG. **2** is a perspective view of a full tread attached to a truck tire in accordance with the known prior art.
FIG. **3** is a top perspective view of a portion of a truck tire tread in accordance with a first embodiment of the invention.
FIG. **4** is a perspective view showing an inventive detail of the truck tire tread in accordance with a first embodiment of the invention.
FIG. **5** is a perspective transparent view showing the tread detail shown in FIG. **4** where normally-hidden under-surface features are made fully visible.
FIG. **6** is a top perspective view similar to FIG. **3** showing a portion of a truck tire tread in accordance with a second embodiment of the invention.
FIG. **7** is a perspective view of a mold element being used during a tire molding process to form a tire tread according to a third embodiment of the invention.
FIG. **8** is a perspective view of a full tread attached to a truck tire according to the first embodiment of the invention.
FIG. **9** is a top perspective view of a portion of a truck tire tread in accordance with an embodiment of the invention having a ducted longitudinal sipe feature.
FIG. **10** is a perspective transparent view of an example of a tire tread having a ducted longitudinal sipe feature.

### DETAILED DESCRIPTION OF PARTICULAR EMBODIMENTS

Particular embodiments of the present invention include tires and treads for vehicles that provide improvements in tire performance that include, for example, improvements in irregular wear, resistance to crack propagation and improvements in wet traction. It is a combination of the tread structure and the materials that make up the tire tread that provide these surprising benefits.

While the tire tread disclosed herein may be used on a variety of vehicles, it is particularly useful for treads on heavy vehicles such as dump trucks, buses, trains that run on tires and those trucks that are used in the long-haul trucking industry and include, for example, both the tractors and trailers of tractor-trailer trucks. Because of the improvements obtained in the tread's resistance to irregular wear, the tread is particularly useful for long-haul trucks in the trucking industry.

The tire treads disclosed herein include improvements to a truck tire tread and truck tire that was fully described in a previous patent application filed by the Applicants, namely application number PCT/US2015/064673, such application being fully incorporated herein by reference.

Without limiting the invention, it is thought that the very stiff sculpture that is disclosed herein for the tread can be improved by providing a tread material having a higher hysteresis. The combination of the material with high hysteresis and the rigid sculpture surprisingly provide good resistance to irregular wear, resistance to crack propagation and improved wet traction while still providing a tire having a rolling resistance that is not severely impacted when compared to tires that are currently available as low rolling resistance tires on the market. Particular embodiments may include forming the tread from rubber composition having a maximum tan delta (a measurement of hysteresis) between 0.2 and 0.4 or alternatively between 0.25 and 0.35 as measured in accordance with ASTM D5992-96.

More particularly, it has been found that a rubber composition that includes blending a large amount of a low glass transition temperature (Tg) rubber component with a high Tg resin provides a particularly useful tread compound for the tires and treads disclosed herein.

As used herein, "phr" is "parts per hundred parts of rubber by weight" and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

Embodiments of the invention include a tire tread, and a tire including the tire tread, where the tire tread has a series of similar specific tread features repeated along its longitudinal direction as well as being formed from a rubber composition that includes at least 75 phr of a first rubber component selected from a polybutadiene rubber (BR), a styrene-butadiene rubber (SBR) or combinations thereof having a Tg of between -80 °C and -110 °C, between 0 phr and 25 phr of a second rubber component that is a diene elastomer, at least 40 phr of a plasticizing resin having a Tg of at least 25° C and a reinforcing filler.

Specific embodiments, exemplary of the invention, are further described in association with the figures included herewith. It is appreciated that the inventive tire tread may comprise any tire tread for use in forming a tire. For example, the tire tread may be an original tread formed with a new tire, or may be applied to a used tire during retreading operations.

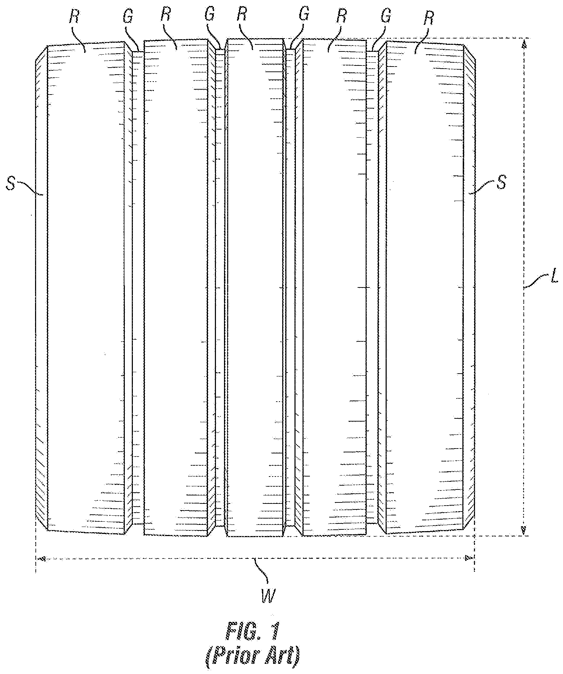

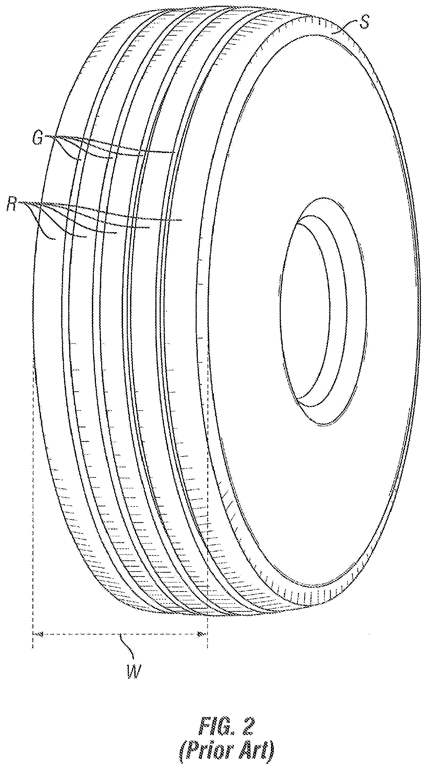

First addressing what is typically viewed as a heavy truck tire in the prior art, FIGS. **1-2** show a heavy truck tire tread of the known prior art. Such a tread includes a length configured to extend annularly around a tire and a width extending in a direction transverse to the length. The tread length extends in a direction which is also referred to as a lengthwise or longitudinal direction **L** of the tread. The tread width extends in a transverse direction **W** which is perpendicular to the longitudinal direction **L** of the tread. The transverse direction of the tread is also referred to as a lateral or widthwise direction of the tread. The tire tread also includes a pair of opposing lateral sides **S** spaced apart in the transverse direction to define the tread width. The pair of opposing lateral sides can be described as comprising a first lateral side and a second lateral side. The tire tread also includes an outer, ground-engaging side extending between the pair of opposing lateral sides.

As shown also in FIGS. **1-2****,** a heavy truck tire tread according to the known prior art includes longitudinal grooves **G** intended to allow water to escape from the contact patch when the tire is rolling on a wet road surface. A groove is the space formed in a tread between walls of material over a depth at most equal to the thickness of the tread, these walls of material not coming into contact with one another in the usual running conditions of the tire. Longitudinal grooves are typically between 5 and 15 mm in width. Adjacent to each longitudinal groove are ribs **R** that constitute together the ground-engaging surface of the tread. In free-rolling tire treads (so called steer and trailer wheel positions), especially for long haul trucks, ribs are essentially continuous along the tire circumference. Additional molded features like sipes (not shown on the drawings) may also be present in some or in all of the ribs and appear at the ground-engaging surface of the tread. A sipe is the space formed in a tread between walls of material over a depth at most equal to the thickness of the tread, the said walls being able, at least in part, to come into contact with one another in the usual running conditions of the tire. Sipes are generally made as thin as manufacturing would reasonably allow, most of the time under 1 mm and preferably under 0.5 mm but may be much wider and, for example, in particular embodiments may have a width of up to 2 mm or alternatively up to 1.5 mm.

The Contact Surface Area (CSR) of a tire is known as the ratio of the tread surface being in contact with the operating surface to the operating surface. In free-rolling tire treads, the exact CSR is mostly dependent upon the number and the width of the longitudinal grooves. Free-rolling tire treads typically have at least three such grooves with most of those treads having a number of four grooves. CSR values typically range from 0.7 to 0.8 in this tire segment. An example of such a tire is the commercially available Michelin XZA3 275/80 R22.5. This tire has 4 grooves and it has a CSR of 0.78.

As is known, increasing the CSR is known to be beneficial for wear life and can be beneficial for rolling resistance too. However, increasing the CSR is also known for harming the wet braking adherence performance of the tread. Breaking this compromise is sought by tire designers and achieved in the tire disclosed herein.

The tread also includes a thickness extending from the outer, ground-engaging side to a bottom side of the tread. The thickness extends in a direction perpendicular to the ground-engaging surface. The tread bottom side is configured to engage a tire when the tread is attached to the tire. Most commonly, the bottom side is bonded to the tire, but there are other ways to attach a tread to a tire that may be employed to attach the inventive tread to a tire.

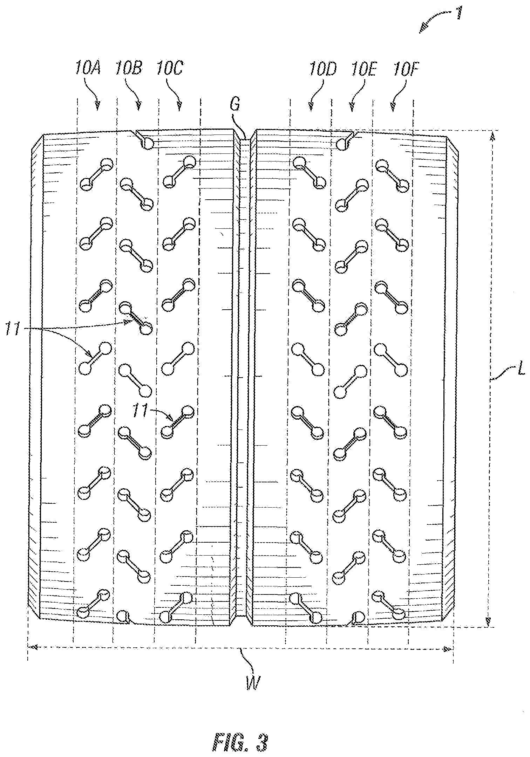

As shown in FIG. **3****,** a first embodiment of the inventive tread **1** comprises several series of similar tread features **11.** In each series, those tread features are repeated along the longitudinal direction of the tread. In the shown embodiment, there are six series (**10A, 10B, 10C, 10D, 10E, 10F**) arranged parallel to one another across the width of the tread. In turn, this tread comprises only one longitudinal groove **G** compared to the four grooves present in the prior art tread of FIG. **1****.**

It should be noted that "similar" tread features does not mean "identical" tread features. The similar tread features are similar in that they all include the two ducts and connecting void as described below. However, since the dimensions and orientations of the similar tread features may be different, the similar features are not required to be identical one to the other. In particular embodiments the similar tread features in a given series are identical and optionally may be identical in all the series.

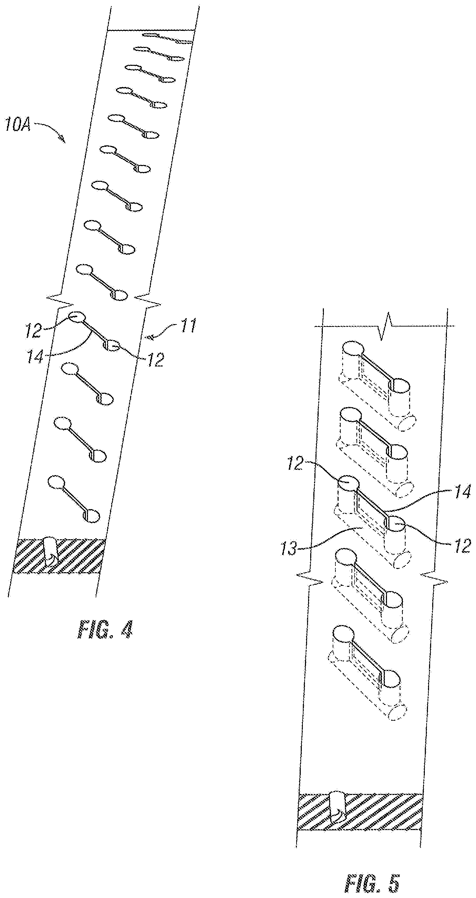

FIGS. **4-5** show in more detail the tread features of one of the series. Each of the tread features comprises two ducts **12** extending from the ground-engaging surface in the thickness direction. Each of the tread features also comprises a common void **13** (only visible on the transparent view of FIG. **5**) running under the ground-engaging surface of the tread. The two ducts are connected to respective ends of the void. Each of the tread features further comprises a sipe **14.** The sipe joins the ground-engaging surface of the tread with the void and said two ducts.

As shown in FIG. **3-5****,** the two ducts of each feature are preferably offset in the longitudinal and transverse directions of the tread; *i.e.,* they are offset with a transverse direction component and a lateral direction component. Alternatively the two ducts may be arranged with no offset, instead arranged in the lateral direction or transverse direction or a combination of any suitable arrangement. Preferably the distance between the two ducts is at least equal to 4 mm.

As clearly visible form FIG. **3****,** each feature in each series is blind, that is to say the individual tread features are not in fluidic connection with the center groove **G** or the tread sides **S** and also not in fluidic connection with another tread feature be it from the same series or from a neighboring series.

The CSR of such a tread is therefore greatly increased. For example, the tread as shown on FIG. **3** has a CSR of 0.89. Despite this high CSR value, the wet braking adherence performance is maintained at a level similar to that of the prior art tread.

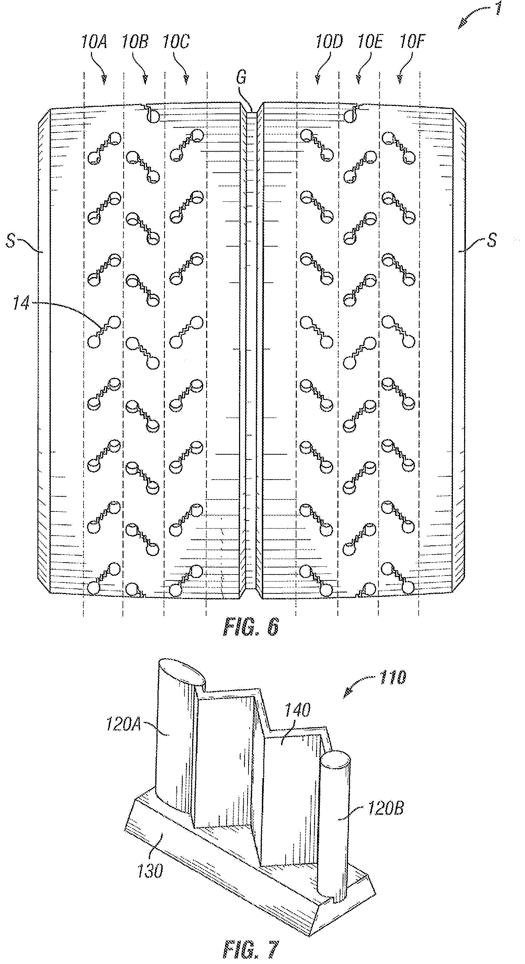

In a second embodiment of the invention shown on FIG. **6****,** the sipes may have an undulated shape. Undulated sipes are known to promote tread stiffness due to the sipe walls interlocking. Undulations may have many different shapes and can typically be one-directional (so called zigzag sipes) or bi-directional (so called egg-crate sipes).

FIG. **7** shows a molding element that can be used in a mold used for molding a third embodiment of the inventive tread. Because it shows the negative form or the specific tread feature of the invention, it may help better understanding its spirit. The molding element **110** comprises two pins **120A** and **120B,** intended to form the ducts **12.** A lug **130** joining the two pins is intended to form the connecting void **13.** A one-direction undulated (zigzag) blade **140** joins the lug and the pins and will form the sipe **14** in the tread. Such a molding element **110** will be repeated many times in the mold. Those repetitions need to be aligned together along the longitudinal direction of the tread to form one series of tread features characteristic of the invention and more preferably form several of those series across the tread.

FIG. **7** also serves to show that the void and ducts may have many different shapes as long as they can provide a sufficient fluid passage from one duct to the other duct of each such tread feature. Their sections may also vary along their length, provided their section area remain at least equal to 10 mm² and preferably between 12.6 mm² and 78.6 mm² which correspond to a diameter of between 4 mm and 10 mm in the case of sections of circular shape.

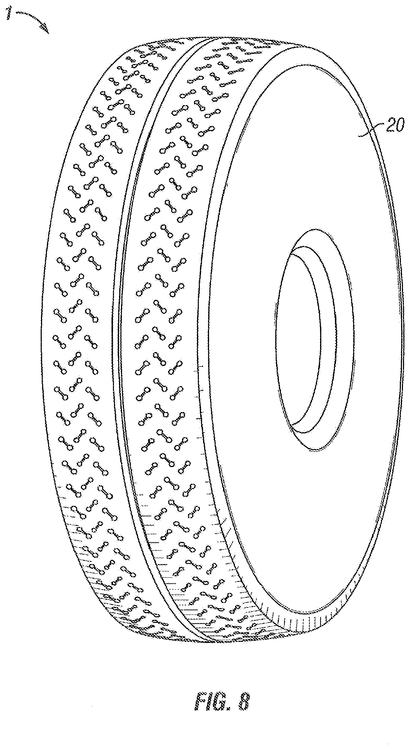

In an exemplary embodiment of the inventive tire tread shown in FIGS. **8****,** a tread **1** is shown attached to a tire **20.** It is appreciated that the tire may comprise any known tire, which may comprise any pneumatic or non-pneumatic tire. Additionally, for any such tire, the tread may be attached using any known manner. For example, in particular instances, the tire tread may be: (1) bonded to the tire by vulcanization; (2) attached using an adhesive; and/or, (3) even using mechanical means. It is appreciated that in different instances, the tire tread is either an original tread attached to a new tire or a replacement tread for use in forming a retreaded tire. The tread shown here is similar to the tread of FIG. **3** having one longitudinal groove **G** in the center and three series of tread features on each side of the center groove.

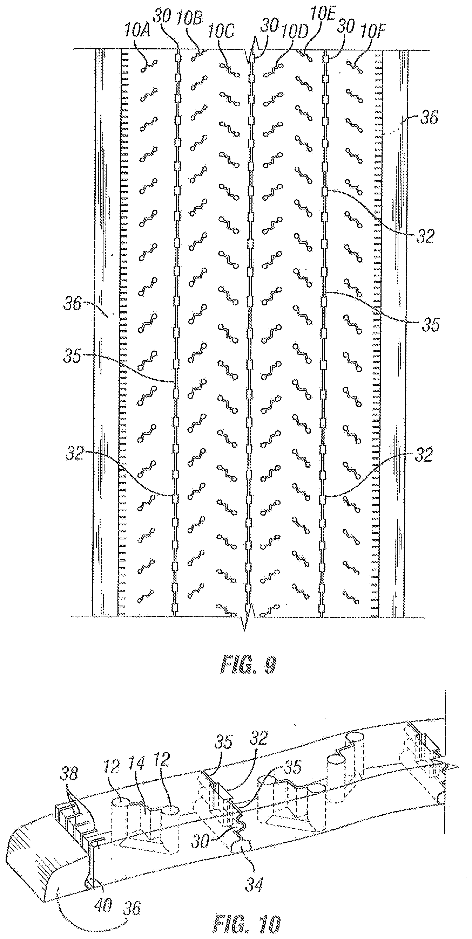

In a further embodiment, as shown in FIGS, **9-10****,** the tire includes one or more ducted longitudinal sipe features **30.** These features can be used similarly to the longitudinal groove G but without the same decrease in the CSR. Like the longitudinal groove G, the ducted longitudinal sipe may provide an escape and storage of water from the contact patch. The longitudinal sipe feature **30** includes a plurality of ducts **32** that are spaced apart one from the other and have a length of between 50% and 100% of the thickness of the tread. The longitudinal sipe feature further includes a void **34** (only visible in FIG. **10**) running under the ground-engaging surface of the tread. The plurality of ducts **32** are in fluid communication with the void **34.** The longitudinal sipe feature further includes sipes **35** that are cut longitudinally with a length that extends to the void **34** so that they join the adjacent ducts **32** and the void **34.**

The void **34** of the longitudinal sipe feature **30** may, in particular embodiments, have a section area of at least 10 mm² or alternatively between 12.6 mm² and 78.6 mm² as measured normal to the ground engaging surface. Embodiments may include that the void extends substantially parallel to the ground-engaging surface of the tread and at a distance therefrom.

As may be seen in FIG. **10****,** the sipes **35** may be undulated, as is shown in the figure as a zigzag undulation. As noted above, undulations may have many different shapes and can typically be one-directional (so called zigzag sipes) or bi-directional (so called egg-crate sipes). Embodiments may include the sipes having no undulations or having undulations as may be suitable for a particular design.

While it is contemplated that the ducted longitudinal sipe features **30** will extend entirely along the length of the tread (or entirely around the circumference of the tire) it is recognized that the feature **30** may be divided and include separated independent lengths that extend - in total - entirely or substantially along the length of the tread for the same or nearly the same effect.

Particular embodiments of the tire disclosed herein may include one or several such ducted longitudinal sipe features. The example tire tread shown in FIG. **9** includes three such features that separate six series of tread features (**10A**), (**10B**, **10C**), (**10D**, **10E**) and (**10F**).

Optionally the tire treads disclosed herein may include a sacrificial rib **36** as is known in the industry. A sacrificial rib **36** as shown in FIGS. **9-10****,** is located in the shoulder area of the tread and may help minimize irregular wear. The sacrificial rib **36** includes a groove **40** and a series of microsipes **38** along the inner edge of the groove.

In addition to the features disclosed above relating to the tread sculpture, the tires and treads disclosed herein also include a materials component. It is the combination of the materials that form the tread with the tread sculpture that provides a tire and a tire tread having improved properties that typically include the reduction in irregular wear, the reduction in crack propagation and the increased wet traction.

It is recognized that treads may be formed from only one rubber composition or in two or more layers of differing rubber compositions, *e.g*., a cap and base construction. In a cap and base construction, the cap portion of the tread is made of one rubber composition that is designed for contact with the road. The cap is supported on the base portion of the tread, the base portion made of a different rubber composition. In particular embodiments of the treads disclosed herein, the entire tread may be made from the disclosed rubber compositions while in other embodiments only the cap portion of the tread may be made from such rubber compositions.

Alternatively the tread may be formed of two rubber compositions, one forming the side portions of the tread and a second rubber composition, or central rubber composition, forming the central portion of the tread. In such an embodiment, the tread may be divided into a central portion and two side portions, the side portions (that include the shoulders of the tread) formed of the rubber composition disclosed herein having, *inter alia,* at least 75 phr of a first rubber component selected from a polybutadiene rubber (BR), a styrene-butadiene rubber (SBR) or combinations thereof having a Tg of between -80 °C and -110 °C. The central portion may be formed of a different rubber composition, a central rubber composition, that includes at least 75 phr of a natural rubber and includes other components as known to those skilled in the art. Such a useful central rubber composition may be, for example, the witness rubber composition W provided in Example **1** below.

Particular embodiments may include the side portions as being no more than 50% of the total width of the tire, or each being no more than 25% of the total width of the tire. Alternatively each of the side portions may be no more than 20%, 15% or 10% of the total width of the tire.

If the outer sides of a tread are formed of the disclosed rubber composition comprising, *inter alia,* the low Tg elastomers and the central portion is formed of a more conventional tread rubber composition for trucks, then the entire tread comprises sides formed of a rubber composition that provides improved crack propagation resistance and improved irregular wear where the risk of such issues are highest and the tread further comprises the central portion formed of a more conventional rubber composition having better rolling resistance properties.

The rubber compositions that are disclosed herein as being useful for treads include a polybutadiene rubber (BR), a styrene-butadiene rubber (SBR) or combinations thereof. Such useful rubbers may be characterized as having a low glass transition temperature (Tg), *i.e.,* a Tg of between -80 °C and -110 °C or alternatively between -80 °C and -105 °C, between -85 °C and -105 °C or between -90 °C and -100 °C. The glass transition temperatures of such elastomers may be measured by differential scanning calorimetry (DSC) in accordance with ASTM D3418.

For a rubber composition that includes such a large proportion of a low Tg elastomer to be useful as a tread rubber composition, sufficient plasticizing resin (and/or other plasticizers such as oil) must be added to the mixture to bring the Tg of the tread itself up to a useful temperature, *e.g.,* of between -40° C and 0° C for some embodiments or alternatively between -35° C and -5° C. As is known in the art, plasticizing resin may be added to a rubber composition to increase its Tg so the lower the Tg of the rubber components, the more plasticizing resin must be added to raise the Tg of the cured rubber composition to a desired target. It is thought that the large quantity of resin and filler that is added to the rubber compositions disclosed herein provides a material having a higher hysteresis than would be thought to be useful for heavy truck tires. However, when used to form the treads that have a high rigidity due to their structure and high CSR, the result is the surprising improvements to the tires and tire treads having the combination of the disclosed tread structure and materials.

Generally any BR or SBR is suitable for use in the disclosed treads so long as they have a Tg falling within the broad ranges mentioned above. Particularly embodiments may include such elastomers that have been functionalized. Examples of functionalized rubbers include those that have been modified by functionalizing the backbone or the branches of the elastomers. As noted, such modifications of elastomers are well known and may include, for example, modifying the elastomers with silanol or polysiloxane as may be described, for example, in US Patent 6,013,718. Other examples include those having alkoxysilane groups as described in US Patent 5,977,238, carboxylic groups as described in US 6,815,473 or polyether groups as described in US 6,503,973, all of these cited patents being fully incorporated herein by reference.

As noted above, the rubber compositions useful for particular embodiments of the present invention may include BR as a useful rubber component. In some embodiments, the BR may be limited to a BR having a high *cis-1,4* bond content. Polybutadiene rubber is a well-known rubber that is made by polymerizing the 1,3-butadiene monomer (typically homopolymerization) in a solution polymerization process using suitable catalysts as known to those skilled in the art. Because of the two double bonds present in the butadiene monomer, the resulting polybutadiene may include three different forms: *cis*-1,4, *trans*-1,4 and *vinyl*-1,2 polybutadiene. The *cis-1,4* and *trans*-1,4 elastomers are formed by the monomers connecting end-to-end while the *vinyl*-1,2 elastomer is formed by the monomers connecting between the ends of the monomer. The catalyst selection and the temperature of the process are known as the variables typically used to control the *cis-1,4* bond content of the polybutadiene.

In particular embodiments of the rubber compositions, the polybutadiene is produced using a neodymium catalyst and the resultant polybutadiene may be characterized as having a *cis-1,4* bond content of at least 95 % and in other embodiments of at least 96 %, at least 98 %, between 96 % and 99.5 %, between 96 % and 99 % or between 96 % and 98.5 %. Other catalysts such as cobalt and nickel may also be used and the method of making such polybutadiene is not a part of this invention as such materials are well known in the industry. An acceptable polybutadiene suitable for use with the rubber compositions disclosed herein include, for example, CB22 that is marketed by Lanxess.

As noted above, the rubber compositions useful for particular embodiments of the present invention may include SBR as a useful rubber component. As is well known, SBR is a copolymer of styrene and butadiene and may be manufactured by any of the known processes including solution and emulsion processes as may be suitable.

The microstructure of the SBR is typically described in terms of the amount of bound styrene and the form of the butadiene portion of the polymer. Looking first at the amount of bound styrene, since the Tg of the SBR increases as the bound styrene content increases it is necessary to limit the amount of bound styrene to an amount that still provides the required low Tg of the elastomer. Particular embodiments of the present invention may utilize an SBR having a bound styrene content, for example, of between 3 wt% and 30 wt% or alternatively between 3 wt% and 25 wt% or between 5 wt% and 20 wt% bound styrene.

Considering the butadiene portion of the copolymer, the butadiene portion is made up of three forms because of the double bond present in that butadiene portion. The three forms are the *cis*-1,4, *trans*-1, 4 and *vinyl*-1,2 forms. Higher levels of the *cis*-form may typically provide a lower Tg while increasing levels of the *vinyl*-form may typically increase the Tg. SBR materials suitable for use as the low Tg SBR may be described, for example, as having a vinyl-1,2-bond content of between 4 mol% and 30 mol% or alternatively, between 4 mol% and 25 mol% or between 4 mol% and 20 mol%. Microstructures that provide an elastomer having a Tg outside the acceptable ranges mentioned above would not be suitable for the treads and tires disclosed herein.

Particular embodiments of the suitable rubber compositions useful for tire treads and tires disclosed herein include between 75 phr and 100 phr of the low Tg rubber component selected from BR, SBR and combinations thereof. Alternatively the rubber compositions may include between 80 phr and 100 phr of the low Tg rubber component, between 85 phr and 100 phr, between 90 phr and 100 phr or greater than 90 phr of the low Tg rubber component. Particular embodiments include 100 phr of the low Tg rubber component. Particular embodiments are limited to having only polybutadiene as the low Tg rubber component.

In addition to the low Tg BR and/or SBR, particular embodiments of the rubber compositions disclosed herein may include up to 25 phr of one or more additional secondary diene rubber components. Other embodiments may include up to 15 phr, up to 10 phr or up to 5 phr of a secondary diene rubber component or none. Such secondary diene elastomers are understood to be those elastomers resulting at least in part, *i.e.,* a homopolymer or a copolymer, from diene monomers, *i.e.,* monomers having two double carbon-carbon bonds, whether conjugated or not.

These additional diene elastomers may be classified as either "essentially unsaturated" diene elastomers or "essentially saturated" diene elastomers. As used herein, essentially unsaturated diene elastomers are diene elastomers resulting at least in part from conjugated diene monomers, the essentially unsaturated diene elastomers having a content of such members or units of diene origin (conjugated dienes) that is at least 15 mol. %. Within the category of essentially unsaturated diene elastomers are highly unsaturated diene elastomers, which are diene elastomers having a content of units of diene origin (conjugated diene) that is greater than 50 mol. %.

Those diene elastomers that do not fall into the definition of being essentially unsaturated are, therefore, the essentially saturated diene elastomers. Such elastomers include, for example, butyl rubbers and copolymers of dienes and of alpha-olefins of the EPDM type. These diene elastomers have low or very low content of units of diene origin (conjugated dienes), such content being less than 15 mol. %. Particular embodiments of the present invention exclude any additional diene elastomers that are essentially saturated.

Suitable elastomers that may be included as secondary elastomers in the rubber compositions disclosed include, for example, one or more highly unsaturated elastomers such as polyisoprenes (IR), natural rubber (NR), butadiene copolymers, isoprene copolymers and mixtures of these elastomers. Such copolymers include, for example, isoprene/butadiene copolymers (BIR), isoprene/styrene copolymers (SIR) and isoprene/butadiene/styrene copolymers (SBIR). Particular embodiments of the present invention are limited only to highly unsaturated diene elastomers as useful secondary rubber components.

In addition to the rubber, the rubber composition disclosed herein may further include a reinforcing filler. Reinforcing fillers are added to rubber compositions to, *inter alia,* improve their tensile strength and wear resistance. Particular embodiments of the present invention include treads that are made of a rubber composition that includes fairly high loadings of inorganic reinforcing fillers such as silica with which a coupling agent is typically associated. Particular embodiments may also include treads made from rubber compositions that include carbon black, inorganic fillers or combinations thereof.

Carbon black, although a useful reinforcing filler in many tire applications, is explicitly excluded from some embodiments of the rubber compositions disclosed herein except, for some embodiments, very small quantities that may be included to provide coloring (black) to the tire composition and/or UV protection. Such benefits may be obtained by adding at least 0.5 phr but no more than 20 phr of carbon black or alternatively, less than 10 phr, less than 5 phr or between 0.5 phr and 10 phr of carbon black or between 0.5 and 5 phr.

Inorganic reinforcing fillers include any inorganic or mineral fillers, whatever its color or origin (natural or synthetic), that are capable without any other means, other than an intermediate coupling agent, of reinforcing a rubber composition intended for the manufacture of tires. Such inorganic reinforcing fillers can replace conventional tire-grade carbon blacks, in whole or in part, in a rubber composition intended for the manufacture of tires. Typically such fillers may be characterized as having the presence of hydroxyl (-OH) groups on its surface.

Inorganic reinforcing fillers may take many useful forms including, for example, as powder, microbeads, granules, balls and/or any other suitable form as well as mixtures thereof. Examples of suitable inorganic reinforcing fillers include mineral fillers of the siliceous type, such as silica (SiO₂), of the aluminous type, such as alumina (AlO₃) or combinations thereof.

Useful silica reinforcing fillers known in the art include fumed, precipitated and/or highly dispersible silica (known as "HD" silica). Examples of highly dispersible silicas include Ultrasil 7000 and Ultrasil 7005 from Degussa, the silicas Zeosil 1165MP, 1135MP and 1115MP from Rhodia, the silica Hi-Sil EZ150G from PPG and the silicas Zeopol 8715, 8745 and 8755 from Huber. In particular embodiments, the silica may have a BET surface area, for example, of between 60 m²/g and 250 m²/g or alternatively between 80 m²/g and 230 m²/g.

Examples of useful reinforcing aluminas are the aluminas Baikalox A125 or CR125 from Baikowski, APA-100RDX from Condea, Aluminoxid C from Degussa or AKP-G015 from Sumitomo Chemicals.

For coupling the inorganic reinforcing filler to the diene elastomer, a coupling agent that is at least bifunctional provides a sufficient chemical and/or physical connection between the inorganic reinforcement filler and the diene elastomer. Examples of such coupling agents include bifunctional organosilanes or polyorganosiloxanes. Such coupling agents and their use are well known in the art. The coupling agent may optionally be grafted beforehand onto the diene elastomer or onto the inorganic reinforcing filler as is known. Otherwise it may be mixed into the rubber composition in its free or non-grafted state. One useful coupling agent is X 50-S, a 50-50 blend by weight of Si69 (the active ingredient) and N330 carbon black, available from Evonik Degussa.

In the rubber compositions according to the invention, the coupling agent may be included at any suitable amount for the given application, examples of which are between 2 phr and 15 phr or alternatively, between 2 phr and 12 phr or between 3 phr and 10 phr. It is generally desirable to minimize its use. In particular embodiments, the amount of coupling agent may represent between 0.5 and 15 wt. % relative to the total weight of the silica filler. In the case for example of tire treads for passenger vehicles, the coupling agent may be less than 12 wt. % or even less than 10 wt. % or 8 wt. % relative to the total weight of the silica filler.

For those embodiments that include carbon black in the rubber compositions in quantities greater than the very small quantities mentioned above, any of the carbon blacks that may be known to be useful in tread applications would be suitable. In such embodiments, the carbon black may be used as the sole filler or may be mixed with other reinforcing fillers, such as silica and/or other inorganic reinforcing fillers.

Suitable carbon blacks include, for example, those of the type HAF, ISAF and SAF, conventionally used in tires. Reinforcing blacks of ASTM grade series 100, 200 and/or 300 are suitable such as, for example, the blacks N115, N134, N234, N330, N339, N347, N375 or alternatively, depending on the intended application, blacks of higher ASTM grade series such as N660, N683 and N772.

In particular embodiments, the reinforcing filler is included in the rubber compositions disclosed herein at a fairly high loading for such tread applications because it is the high loading, coupled with the use of the low Tg rubber component and the plasticizing resin, that provides the desired characteristics of the treads and tires of the present invention. Indeed, the amount of reinforcing filler, be it an organic filler, inorganic filler or combinations thereof, added to the rubber compositions may include between 90 phr and 150 phr of the filler or alternatively, between 90 phr and 130 phr, between 95 phr and 130 phr, between 95 phr and 150 phr or between 100 phr and 120 phr of the filler. In particular embodiments the reinforcing filler may be limited to a silica, especially in particular embodiments to a highly dispersible silica, although in some such embodiments, whether highly dispersible or not, up to 15 phr of carbon black may be added for coloring the rubber composition black or alternatively between 0 phr and 15 phr, between 0 and 10 phr or between 1 phr and 10 phr of carbon black may be added to such rubber compositions.

As noted above, particular embodiments of the present invention further include a plasticizing system that includes a high Tg resin and optionally a plasticizing liquid in addition to the resin. The plasticizing system may provide both an improvement to the processability of the rubber mix and/or a means for adjusting the rubber composition's glass transition temperature and/or its rigidity. In particular embodiments, effective amounts of the plasticizing system may be, for example, between 50 phr and 120 phr or alternatively between 60 phr and 110 phr or between 70 phr and 120 phr.

Suitable plasticizing liquids may include any liquid known for its plasticizing properties with diene elastomers. At room temperature (23 °C), these liquid plasticizers or these oils of varying viscosity are liquid as opposed to the resins that are solid. Examples include those derived from petroleum stocks, those having a vegetable base and combinations thereof. Examples of oils that are petroleum based include aromatic oils, paraffinic oils, naphthenic oils, MES oils, TDAE oils and so forth as known in the industry. Also known are liquid diene polymers, the polyolefin oils, ether plasticizers, ester plasticizers, phosphate plasticizers, sulfonate plasticizers and combinations of liquid plasticizers.

Examples of suitable vegetable oils include sunflower oil, soybean oil, safflower oil, corn oil, linseed oil and cotton seed oil. These oils and other such vegetable oils may be used singularly or in combination. In some embodiments, sunflower oil having a high oleic acid content (at least 70 weight percent or alternatively, at least 80 weight percent) is useful, an example being AGRI-PURE 80, available from Cargill with offices in Minneapolis, MN. In particular embodiments of the present invention, the selection of a suitable plasticizing liquid is limited to a vegetable oil having a high oleic acid content.

The amount of plasticizing liquid useful in any particular embodiment of the present invention depends upon the particular circumstances and the desired result. In general, for example, the plasticizing liquid may be present in the rubber composition in an amount of between 0 phr and 20 phr or alternatively, between 0 phr and 15 phr, between 0 phr and 10 phr, between 5 phr and 10 phr or between 5 phr and 15 phr of the plasticizing liquid. It is noted that in some embodiments, use of any plasticizing liquid may reduce the desired properties of the rubber articles formed from such rubber compositions and therefore, in some embodiments, no plasticizing liquid is used.

A plasticizing hydrocarbon resin is a hydrocarbon compound that is solid at ambient temperature (*e.g.,* 23 °C) as opposed to a liquid plasticizing compound, such as a plasticizing oil. Additionally a plasticizing hydrocarbon resin is compatible, *i.e.,* miscible, with the rubber composition with which the resin is mixed at a concentration that allows the resin to act as a true plasticizing agent, *e.g.,* at a concentration that is typically at least 5 phr (parts per hundred parts rubber by weight).

Plasticizing hydrocarbon resins are polymers that can be aliphatic, aromatic or combinations of these types, meaning that the polymeric base of the resin may be formed from aliphatic and/or aromatic monomers. These resins can be natural or synthetic materials and can be petroleum based, in which case the resins may be called petroleum plasticizing resins, or based on plant materials. In particular embodiments, although not limiting the invention, these resins may contain essentially only hydrogen and carbon atoms.

The plasticizing hydrocarbon resins useful in particular embodiment of the present invention include those that are homopolymers or copolymers of cyclopentadiene (CPD) or dicyclopentadiene (DCPD), homopolymers or copolymers of terpene, homopolymers or copolymers of C₅ cut and mixtures thereof.

Such copolymer plasticizing hydrocarbon resins as discussed generally above may include, for example, resins made up of copolymers of (D)CPD/ vinyl-aromatic, of (D)CPD/ terpene, of (D)CPD/ C₅ cut, of terpene/ vinyl-aromatic, of C₅ cut/ vinyl-aromatic and of combinations thereof.

Terpene monomers useful for the terpene homopolymer and copolymer resins include alpha-pinene, beta-pinene and limonene. Particular embodiments include polymers of the limonene monomers that include three isomers: the L-limonene (laevorotatory enantiomer), the D-limonene (dextrorotatory enantiomer), or even the dipentene, a racemic mixture of the dextrorotatory and laevorotatory enantiomers.

Examples of vinyl aromatic monomers include styrene, alpha- methylstyrene, ortho-, meta-, para-methylstyrene, vinyl-toluene, para-tertiobutylstyrene, methoxystyrenes, chloro-styrenes, vinyl-mesitylene, divinylbenzene, vinylnaphthalene, any vinyl-aromatic monomer coming from the C₉ cut (or, more generally, from a C₈ to C₁₀ cut). Particular embodiments that include a vinyl-aromatic copolymer include the vinyl-aromatic in the minority monomer, expressed in molar fraction, in the copolymer.

Particular embodiments of the present invention include as the plasticizing hydrocarbon resin the (D)CPD homopolymer resins, the (D)CPD/ styrene copolymer resins, the polylimonene resins, the limonene/ styrene copolymer resins, the limonene/ D(CPD) copolymer resins, C₅ cut/ styrene copolymer resins, C₅ cut/ C₉ cut copolymer resins, and mixtures thereof.

Commercially available plasticizing resins that include terpene resins suitable for use in the present invention include a polyalphapinene resin marketed under the name Resin R2495 by Hercules Inc. of Wilmington, DE. Resin R2495 has a molecular weight of about 932 g/mol, a softening point of about 135°C and a glass transition temperature of about 91°C. Another commercially available product that may be used in the present invention includes DERCOLYTE L120 sold by the company DRT of France. DERCOLYTE L120 polyterpene-limonene resin has a number average molecular weight of about 625 g/mol, a weight average molecular weight of about 1010 g/mol, an Ip of about 1.6, a softening point of about 119°C and has a glass transition temperature of about 72° C. Still another commercially available terpene resin that may be used in the present invention includes SYLVARES TR 7125 and/or SYLVARES TR 5147 polylimonene resin sold by the Arizona Chemical Company of Jacksonville, FL. SYLVARES 7125 polylimonene resin has a molecular weight of about 1090 g/mol, has a softening point of about 125° C, and has a glass transition temperature of about 73°C while the SYLVARES TR 5147 has a molecular weight of about 945 g/mol, a softening point of about 120 °C and has a glass transition temperature of about 71° C.

Other suitable plasticizing hydrocarbon resins that are commercially available include C₅ cut/ vinyl-aromatic styrene copolymer, notably C₅ cut / styrene or C₅ cut / C₉ cut from Neville Chemical Company under the names SUPER NEVTAC 78, SUPER NEVTAC 85 and SUPER NEVTAC 99; from Goodyear Chemicals under the name WINGTACK EXTRA; from Kolon under names HIKOREZ T1095 and HIKOREZ T1100; and from Exxon under names ESCOREZ 2101 and ECR 373. Another suitable C5/C9 resin is Oppera 373, also available from Exxon, having a glass transition temperature of 45 °C.

Yet other suitable plasticizing hydrocarbon resins that are limonene/styrene copolymer resins that are commercially available include DERCOLYTE TS 105 from DRT of France; and from Arizona Chemical Company under the name ZT115LT and ZT5100.

It may be noted that the glass transition temperatures of plasticizing resins may be measured by Differential Scanning Calorimetry (DCS) in accordance with ASTM D3418 (1999). In particular embodiments, useful resins may be have a glass transition temperature that is at least 25 °C or alternatively, at least 40 °C or at least 60 °C or between 25 °C and 95 °C, between 40 °C and 85 °C or between 60 °C and 80 °C.

The amount of plasticizing hydrocarbon resin useful in any particular embodiment of the present invention depends upon the particular circumstances and the desired result. In particular embodiments, the plasticizing resin may be present in an amount of at least 40 phr or alternatively between 50 phr and 120 phr, between 60 phr and 110 phr or between 70 phr and 120 phr.

In particular embodiments, the glass transition temperature of the rubber composition may be, for example, between -40° C and 0° C or alternatively between -35° C and -5° C, between -35° C and -20° C, between -30° C and -20° C or between -30° C and -25° C.

The rubber compositions disclosed herein may be cured with any suitable curing system including a peroxide curing system or a sulfur curing system. Particular embodiments are cured with a sulfur curing system that includes free sulfur and may further include, for example, one or more of accelerators, stearic acid and zinc oxide. Suitable free sulfur includes, for example, pulverized sulfur, rubber maker's sulfur, commercial sulfur, and insoluble sulfur. The amount of free sulfur included in the rubber composition is not limited and may range, for example, between 0.5 phr and 10 phr or alternatively between 0.5 phr and 5 phr or between 0.5 phr and 3 phr. Particular embodiments may include no free sulfur added in the curing system but instead include sulfur donors.

Those embodiments that may be cured with a peroxide curing system may include an organic peroxide as a peroxide curing agent, examples of which may include di-cumyl peroxide; tert-butyl cumyl peroxide; 2,5-dimethyl-2,5 bis(tert-butyl peroxy)hexyne-3; bis(tert-butyl peroxy isopropyl)benzene; n-butyl 4,4'-di(tert-butyl peroxy) valerate; 1,1-di-tert-butylperoxy-3,3,5-- trimethylcyclohexane; bis-(tert-butyl peroxy)-diisopropyl benzene; t-butyl perbenzoate; di-tert-butyl peroxide; 2,5-dimethyl-2,5-di-tert-butylperoxide hexane and combinations thereof. The amount of peroxide curing agent useful in particular embodiments is not limited and may range, for example, between 0.1 phr and 10 phr. Particular embodiments may utilize the peroxide at between 0.1 phr and 5 phr or alternatively, between 0.5 and 3.5 phr.

Accelerators are used to control the time and/or temperature required for vulcanization and to improve the properties of the cured rubber composition. Particular embodiments of the present invention include one or more accelerators. One example of a suitable primary accelerator useful in the present invention is a sulfenamide. Examples of suitable sulfenamide accelerators include n-cyclohexyl -2-benzothiazole sulfenamide (CBS), N-tert-butyl-2-benzothiazole Sulfenamide (TBBS), N-Oxydiethyl-2-benzthiazolsulfenamid (MBS) and N'-dicyclohexyl-2-benzothiazolesulfenamide (DCBS). Combinations of accelerators are often useful to improve the properties of the cured rubber composition and the particular embodiments include the addition of secondary accelerators.

Particular embodiments may include as a secondary accelerant the use of a moderately fast accelerator such as, for example, diphenylguanidine (DPG), triphenyl guanidine (TPG), diorthotolyl guanidine (DOTG), o-tolylbigaunide (OTBG) or hexamethylene tetramine (HMTA). Such accelerators may be added in an amount of up to 4 phr, between 0.5 and 3 phr, between 0.5 and 2.5 phr or between 1 and 2 phr. Particular embodiments may exclude the use of fast accelerators and/or ultra-fast accelerators such as, for example, the fast accelerators: disulfides and benzothiazoles; and the ultra-accelerators: thiurams, xanthates, dithiocarbamates and dithiophosphates.

Other additives can be added to the rubber compositions disclosed herein as known in the art. Such additives may include, for example, some or all of the following: antidegradants, antioxidants, fatty acids, waxes, stearic acid and zinc oxide. Examples of antidegradants and antioxidants include 6PPD, 77PD, IPPD and TMQ and may be added to rubber compositions in an amount, for example, of from 0.5 phr and 5 phr. Zinc oxide may be added in an amount, for example, of between 1 phr and 6 phr or alternatively, of between 1.5 phr and 4 phr. Waxes may be added in an amount, for example, of between 1 phr and 5 phr.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120° C and 190° C, more narrowly between 130° C and 170° C, is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically between 1 and 30 minutes, for example between 2 and 10 minutes) and at a sufficiently low temperature lower than the vulcanization temperature of the mixture, so as to protect against premature vulcanization.

The rubber composition can be formed into useful articles, including treads for use on vehicle tires. The treads may be formed as tread bands and then later made a part of a tire or they be formed directly onto a tire carcass by, for example, extrusion and then cured in a mold. As such, tread bands may be cured before being disposed on a tire carcass or they may be cured after being disposed on the tire carcass. Typically a tire tread is cured in a known manner in a mold that molds the tread elements into the tread, including, *e.g.,* the sipes and other features of the tread.

The invention is further illustrated by the following examples, which are to be regarded only as illustrations and not delimitative of the invention in any way. The properties of the compositions and the testing results of the tires as disclosed in the examples were evaluated as described below.

Modulus of elongation (MPa) was measured at 10% (MA10) at a temperature of 23 °C based on ASTM Standard D412 on dumb bell test pieces. The measurements were taken in the second elongation; *i.e.,* after an accommodation cycle. These measurements are secant moduli in MPa, based on the original cross section of the test piece.

Dynamic properties (Tg and G*) for the rubber compositions were measured on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress of a constant 0.7 MPa and at a frequency of 10 Hz over a temperature sweep from -60 °C to 100 °C with the temperature increasing at a rate of 1.5 °C/min. The shear modulus G* at 60 °C was captured and the temperature at which the max tan delta occurred was recorded as the glass transition temperature, Tg.

The maximum tan delta dynamic properties for the rubber compositions were measured at 60° C on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress at a frequency of 10 Hz under a controlled temperature of 60° C. Scanning was effected at an amplitude of deformation of 0.05 to 50 % (outward cycle) and then of 50 % to 0.05% (return cycle). The maximum value of the tangent of the loss angle tan delta (max tan δ) was determined during the return cycle.

Tire wear was measured by placing two sets of tires on the steer position of semi-trucks and then running them on a long haul circuit in San Antonio, TX. Measurement of weight loss and tread depth loss was measured every 5000 miles. The results reported in the examples below were normalized against the witness tire, a Michelin XZA3 tire, after 40,000 miles.

The rolling resistance of each of the tires tested was measured by running on a test drum, at an ambient temperature of 25 °C, under a load of 2800 kg and at a speed of 90 km/h, the internal pressure of the tire being 8.6 bar.

Irregular wear and crack propagation were subjective determinations measured after the tires mounted on a truck had been run on a test circuit. The tires were visually inspected and a subjective determination was made.

Wet traction was measured by determining the friction coefficient mu (a dimensionless number). The higher the number, the greater would be the wet traction. The friction coefficient was measured by mounting the test tire on a test platform consisting of a dual wheel straight truck with an instrumented test hub. The vehicle travels down the test surface at a specified constant speed. Brakes are applied to the test wheel with precision to allow controlled stopping of the test wheel. Forces and speeds are recorded for analysis. The friction of coefficient Mu is the ratio of the longitudinal force to the load.

Faulted Fatigue: Cyclic faulted fatigue testing was conducted on cured test samples that were rectangular shaped, with dimensions of 65 mm x 10 mm. A 1 mm fault was cut in the center of the test sample prior to testing. The test was conducted at ambient temperature by imposing cyclic strain from between 0% and 60% on the test pieces. The total number of cycles to failure was recorded for each test sample as the measurement of faulted fatigue.

### Example 1

Rubber compositions were prepared using the components shown in Table 1A. The amount of each component making up the rubber compositions shown in Table 1 are provided in parts per hundred parts of rubber by weight (phr). The polybutadiene was CB22 procured from Lanxess. This polybutadiene had a *cis-*1.4 content of 98.4 %, a number average molecular weight of 160,000 g/mol and a weight average molecular weight of 350,000 g/mol, a polydispersity index (Mw/Mn) of 2.2 and a Mooney viscosity of 63.

The silica was a ZEOSIL 160, a highly dispersible silica available from Rhodia having a specific surface area measured by BET method of 160 m²/g. The resin was Oppera 373 from Exxon, a C5/C9 petroleum resin having a Tg of 45 °C.

The additive package was a typical package including 6PPD, zinc oxide, stearic acid and TMQ. The cure package included accelerators and insoluble sulfur.

The rubber compositions were prepared in a Banbury mixer by mixing the components given in Table **1A,** except for the cure package, until all components were well dispersed and a temperature of between 130 °C and 170 °C was reached. The cure package was added in a second phase on a mill. Curing was effected at 150 °C for 40 minutes. The rubber compositions were then prepared for testing and tested to measure their physical properties, the results of which are shown in Table **1B.**

**Table 1A - Rubber Formulations phr**

| **Formulations** | **W** | **F1** |
|---|---|---|
| NR | 100 | |
| BR, High *cis*-1.4 | | 100 |
| Carbon Black, N299/N234 | 45 | 8.6 |
| Silica | 0 | 100 |
| Silane Coupling Agent | 0 | 8 |
| Oil | 0 | 0 |
| Plasticizing Resin | 0 | 73 |
| Resin System FPR/HMT | 0.6/0.5 | |
| Additives | 8.7 | 6.9 |
| Cure Package | 2.6 | 6.4 |

**Table 1B - Physical Properties**

| **Physical Properties** | **W** | **F1** |
|---|---|---|
| MA10 @23 °C, MPa | 5.4 | 6.3 |
| MA100 @ 23 °C, MPa | 2.2 | 1.8 |
| MA300 @ 23 °C, MPa | 2.3 | 1.8 |
| Tg, °C | -48 | -32 |
| Max Tan Delta | 0.15 | 0.30 |
| Fatigue, cycles to failure | 66,000 | 254,000 |

### Example 2

Using the rubber compositions shown in Table **1,** tires were built having a tread pattern as shown in FIG. 9. The tire size was 275/80R22.5. The ducts of the series tread features had a diameter of 2 mm and were spaced 15 mm apart. The void connecting the ducts was about 4.4 mm wide. The ducts of the ducted longitudinal sipe feature had a diameter of about 3.1 mm and were spaced 26 mm apart. The longitudinal sipe connecting the ducts was about 5.7 mm high and about 3.8 mm wide. The CSR was 0.93. Tire sets were made using the witness rubber composition W and the example composition F1.

These tires were tested as described above along with a commercially available tire, the Michelin XZA3 truck tire. The XZA3 tire is an ultra-fuel-efficient truck tire having 4 longitudinal grooves with a CSR of 0.78. The XZA3 was tested as a 275/80R22.5. The test results for the tires are provided in Table **2.**

**Table 2 - Tire Results**

| | RR, kg/ton | Irregular Wear | Wet Traction, µ Polished Concrete / Sand Asphalt | Wear (normalized) | Crack Propagation |
|---|---|---|---|---|---|
| XZA3 | 5.8 | Good | 0.28/0.52 | 100 | good |
| W with NR | 4.9 | better | 0.15/0.42 | 238 | better |
| F1 with BR | 6.3 | best | 0.24/0.55 | 221 | best |

As may be seen in the test results on the tires, the tire with the BR formulation provided improved wet traction and also provided improved irregular wear performance and crack propagation resistance properties. The normalized wear results indicates that the amount of tread wear was less than half that of the XZA3 tire. While the irregular wear and crack propagation results were subjective, the improvement over the other tires was significant. Note that the wet adherence of the tread having BR was close to the XZA3.

### Example 3

Using the rubber compositions shown in Table **1,** tires were built having a tread pattern as shown in FIG. 9. The tire size was 275/80R22.5. The ducts of the series tread features had a diameter of 2 mm and were spaced 15 mm apart. The void connecting the ducts was about 4.4 mm wide. The ducts of the ducted longitudinal sipe feature had a diameter of about 3.1 mm and were spaced 26 mm apart. The longitudinal sipe connecting the ducts was about 5.7 mm high and about 3.8 mm wide. The CSR was 0.93. Tire sets were made using the witness rubber composition W and the example composition F1.

The treads on these tires were then buffed to simulate that they had been worn with about 5 mm of tread material buffed off the tread before testing leaving close to end-of-useful-life tread depth on the tire to simulate how well the tires performed in that condition. These tires were tested using the same methods as used in the tire testing of Example 2, with the Michelin XZA3 also having 5 mm of tread buffed from its tread to simulate end-of-useful-life tread depth.

**Table 3 - Buffed Tire Results**

| | Wet Traction, µ Polished Concrete | Wet Traction, µ Sand Asphalt |
|---|---|---|
| XZA3 | 0.21 | 0.39 |
| W with NR | 0.15 | 0.36 |
| F1 with BR | 0.22 | 0.50 |

As may be seen in the test results on the tires, the tire with the BR formulation provided improved wet traction at end-of-useful-life conditions with particular improvement on the sand asphalt.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

## Claims

1. A heavy truck tire tread having a longitudinal direction, a transverse direction, a thickness direction, and a ground-engaging surface, the heavy truck tire tread comprising a series of at least 50 similar tread features repeated along its longitudinal direction, each of the similar tread features comprising:
two ducts extending from the ground-engaging surface in the thickness direction, the ducts being apart one from the other and having a duct section area of at least 10 mm² and a length of between 50% and 100% of a thickness of the tread;
one void being in fluid communication with the two ducts, the void extending substantially parallel to the ground-engaging surface of the tread and at a distance therefrom and having a void section area of at least 10 mm²; and
one sipe joining the two ducts and the void, wherein the tread feature is otherwise blind and wherein the heavy truck tire tread is formed at least in part of a rubber composition that is based upon a cross-linkable elastomer composition, the cross-linkable rubber composition comprising, per 100 parts by weight of rubber (phr):
at least 75 phr of a first rubber component selected from a polybutadiene rubber (BR), a styrene-butadiene rubber (SBR) or combinations thereof having a Tg of between -80 °C and -110 °C;
between 0 phr and 25 phr of a secondary rubber component that is a diene elastomer;
at least 40 phr of a plasticizing resin having a Tg of at least 25° C; and
a reinforcing filler;
the Tg of the first rubber component and of the plasticizing resin being measured by Differential Scanning Calorimetry (DSC) in accordance with ASTM D3418.

2. The heavy truck tire tread of claim 1, wherein the two ducts of the tread feature are spaced apart by a distance of at least 4 mm.

3. The heavy truck tire of any of the preceding claims, wherein the two ducts have a duct section area of between 12.6 mm² and 78 mm² and wherein the void has a void section area of between 12.6 mm² and 78 mm².

4. The heavy truck tire of any of the preceding claims, wherein the tread features of the series are such that the two ducts of each feature are offset with a transverse direction component and a lateral direction component of the tread.

5. The heavy truck tread of any of the preceding claims further comprising one or more ducted longitudinal sipe features comprising a plurality of ducts extending from the ground-engaging surface in the thickness direction, the ducts being apart one from the other and having a length of between 50% and 100 % of the thickness of the tread; one void being in fluid communication with each of the plurality of ducts, the void extending substantially parallel to the ground-engaging surface of the tread and at a distance therefrom; and sipes cut longitudinally and extending from the ground-engaging surface in the thickness direction to join the ducts and the void.

6. The heavy truck tire tread of any of the preceding claims, wherein the cross-linkable rubber composition comprises at least 90 phr of the polybutadiene rubber.

7. The heavy truck tire tread of any of the preceding claims, wherein the cross-linkable rubber composition comprises 100 phr of the polybutadiene rubber.

8. The heavy truck tire tread of any of the preceding claims, wherein the Tg of the first rubber component is between -80° C and -105° C.

9. The heavy truck tire tread of any of the preceding claims, wherein the polybutadiene has a *cis-1,4* bond content of at least 95 %.

10. The heavy truck tire tread of any of the preceding claims, wherein the secondary rubber component is selected from natural rubber (NR), polyisoprene (IR) or combinations thereof.

11. The heavy truck tire tread of any of the preceding claims, wherein the reinforcing filler is between 90 phr and 150 phr of silica.

12. The heavy truck tire tread of any of the preceding claims, wherein cross-linkable rubber composition includes between 50 phr and 120 phr of the plasticizing resin.

13. The heavy truck tire tread of any of the preceding claims, wherein a max tan delta of the rubber composition is between 0.2 and 0.4 as measured in accordance with ASTM D5992-96.

14. The heavy truck tire tread of any of the preceding claims, wherein the tread is formed entirely of the rubber composition.

15. The heavy truck tire of any of claims 1 through 13, wherein the tread is laterally divided into a central portion and two side portions, each side portion including no more than 25% of a lateral width of the tread, wherein the side portions are formed of the rubber composition and the central portion is formed of a central rubber composition comprising at least 75 phr of natural rubber.

## Patentansprüche

1. Schwerlastwagen-Reifenlauffläche mit einer Längsrichtung, einer Querrichtung, einer Dickenrichtung und einer den Boden berührenden Fläche, wobei die Schwerlastwagen-Reifenlauffläche eine Reihe von mindestens 50 ähnlichen Laufflächenmerkmalen umfasst, die sich entlang ihrer Längsrichtung wiederholen, wobei jedes der ähnlichen Laufflächenmerkmale umfasst:
zwei Kanäle, die sich von der den Boden berührenden Fläche in Richtung der Dicke erstrecken, wobei die Kanäle voneinander getrennt sind und eine Kanalquerschnittsfläche von mindestens 10 mm² und eine Länge zwischen 50 % und 100 % einer Dicke der Lauffläche aufweisen;
wobei ein Hohlraum in Fluidverbindung mit den beiden Kanälen steht, wobei sich der Hohlraum im Wesentlichen parallel zu der den Boden berührenden Fläche der Lauffläche und in einem Abstand davon erstreckt und eine Hohlraumquerschnittsfläche von mindestens 10 mm² aufweist; und
eine Lamelle, die die beiden Kanäle und den Hohlraum verbindet, wobei das Laufflächenmerkmal ansonsten blind ist und wobei die Schwerlastwagenreifen-Lauffläche zumindest teilweise aus einer Kautschukzusammensetzung gebildet ist, die auf einer vernetzbaren Elastomerzusammensetzung basiert, wobei die vernetzbare Kautschukzusammensetzung pro 100 Gewichtsteile Kautschuk (phr) umfasst:
mindestens 75 phr einer ersten Kautschukkomponente, ausgewählt aus einem Polybutadien-Kautschuk (BR), einem Styrol-Butadien-Kautschuk (SBR) oder Kombinationen davon mit einer Tg zwischen -80 °C und - 110 °C;
zwischen 0 phr und 25 phr einer sekundären Kautschukkomponente, die ein Dien-Elastomer ist;
mindestens 40 phr eines weichmachenden Harzes mit einer Tg von mindestens 25° C; und
einen Verstärkungsfüllstoff;
wobei die Tg der ersten Gummikomponente und des weichmachenden Harzes durch Differential Scanning Calorimetry (DSC) gemäß ASTM D3418 gemessen wird.

2. Schwerlastwagenreifen-Lauffläche nach Anspruch 1, wobei die beiden Kanäle des Laufflächenmerkmals mindestens 4 mm voneinander entfernt sind.

3. Schwerlastwagenreifen nach einem der vorhergehenden Ansprüche, wobei die beiden Kanäle eine Kanalquerschnittsfläche zwischen 12,6 mm² und 78 mm² haben und wobei der Hohlraum eine Hohlraumquerschnittsfläche zwischen 12,6 mm² und 78 mm² hat.

4. Schwerlastwagenreifen nach einem der vorhergehenden Ansprüche, wobei die Laufflächenmerkmale der Serie so beschaffen sind, dass die beiden Kanäle jedes Merkmals mit einer Querrichtungskomponente und einer Seitenrichtungskomponente der Lauffläche versetzt sind.

5. Schwerlastwagen-Lauffläche nach einem der vorhergehenden Ansprüche, die ferner ein oder mehrere kanalisierte Längslamellenmerkmale mit einer Vielzahl von Kanälen aufweist, die sich von der Bodenberührungsfläche in Richtung der Dicke erstrecken, wobei die Kanäle voneinander getrennt sind und eine Länge zwischen 50 % und 100 % der Dicke der Lauffläche haben; wobei ein Hohlraum in Fluidverbindung mit jedem der mehreren Kanäle steht, wobei sich der Hohlraum im Wesentlichen parallel zu der den Boden berührenden Oberfläche der Lauffläche und in einem Abstand davon erstreckt; und Lamellen, die in Längsrichtung geschnitten sind und sich von der bodenberührenden Oberfläche in Richtung der Dicke erstrecken, um die Kanäle und den Hohlraum zu verbinden.

6. Lauffläche eines Schwerlastwagenreifens nach einem der vorhergehenden Ansprüche, wobei die vernetzbare Kautschukzusammensetzung mindestens 90 phr des Polybutadienkautschuks umfasst.

7. Lauffläche eines Schwerlastwagenreifens nach einem der vorhergehenden Ansprüche, wobei die vernetzbare Kautschukzusammensetzung 100 phr des Polybutadienkautschuks umfasst.

8. Lauffläche eines Schwerlastwagenreifens nach einem der vorstehenden Ansprüche, wobei die Tg der ersten Gummikomponente zwischen -80 °C und -105 °C liegt.

9. Lauffläche eines Schwerlastwagenreifens nach einem der vorhergehenden Ansprüche, wobei das Polybutadien einen cis-1,4-Bindungsgehalt von mindestens 95 % aufweist.

10. Lauffläche eines Schwerlastwagenreifens nach einem der vorhergehenden Ansprüche, wobei die sekundäre Kautschukkomponente aus Naturkautschuk (NR), Polyisopren (IR) oder Kombinationen derselben ausgewählt ist.

11. Lauffläche eines Schwerlastwagenreifens nach einem der vorhergehenden Ansprüche, wobei der verstärkende Füllstoff zwischen 90 und 150 phr Siliziumdioxid beträgt.

12. Lauffläche eines Schwerlastwagenreifens nach einem der vorhergehenden Ansprüche, wobei die vernetzbare Kautschukzusammensetzung zwischen 50 und 120 phr des Weichmacherharzes enthält.

13. Lauffläche eines Schwerlastwagenreifens nach einem der vorhergehenden Ansprüche, wobei ein maximales tan delta der Gummizusammensetzung zwischen 0,2 und 0,4 liegt, gemessen gemäß ASTM D5992-96.

14. Lauffläche eines Schwerlastwagenreifens nach einem der vorhergehenden Ansprüche, wobei die Lauffläche vollständig aus der Gummimischung besteht.

15. Schwerlastwagenreifen nach einem der Ansprüche 1 bis 13, wobei die Lauffläche seitlich in einen mittleren Abschnitt und zwei Seitenabschnitte unterteilt ist, wobei jeder Seitenabschnitt nicht mehr als 25 % einer seitlichen Breite der Lauffläche einschließt, wobei die Seitenabschnitte aus der Gummizusammensetzung gebildet sind und der mittlere Abschnitt aus einer zentralen Gummizusammensetzung gebildet ist, die mindestens 75 phr Naturkautschuk umfasst.

## Revendications

1. Chape de pneu poids lourd ayant une direction longitudinale, une direction transversale, une direction d'épaisseur et une surface en contact avec le sol, la chape de pneu poids lourd comprenant une série d'au moins 50 caractéristiques de chape similaires qui se répètent le long de sa direction longitudinale, chacune des caractéristiques de chape similaires comprenant :
deux conduits s'étendant depuis la surface en contact avec le sol dans la direction d'épaisseur, les conduits étant espacés les uns des autres et ayant une superficie de section de conduit d'au moins 10 mm² et une longueur comprise entre 50 % et 100 % d'une épaisseur de la chape ;
un vide étant en communication fluidique avec les deux conduits, le vide s'étendant sensiblement de manière parallèle à la surface en contact avec le sol de la chape et à une certaine distance de celui-ci et ayant une superficie de section de vide d'au moins 10 mm² ; et
une incision joignant les deux conduits et le vide, dans laquelle la caractéristique de chape est en outre aveugle et dans laquelle la chape de pneu poids lourd est formée au moins en partie d'une composition de caoutchouc qui est basée sur une composition élastomère réticulable, la composition de caoutchouc réticulable comprenant, pour 100 parties en poids de caoutchouc (phr) :
au moins 75 phr d'un premier composant de caoutchouc choisi parmi un caoutchouc de polybutadiène (BR), un caoutchouc de styrène et de butadiène (SBR) ou des combinaisons de ceux-ci ayant une Tg comprise entre - 80 °C et -110 °C ;
entre 0 et 25 phr d'un composant de caoutchouc secondaire qui est un élastomère diénique ;
au moins 40 phr d'une résine plastifiante ayant une Tg d'au moins 25 °C ; et
une charge de renfort ;
la Tg du premier composant de caoutchouc et de la résine plastifiante étant mesurée par calorimétrie à balayage différentiel (DSC) selon la norme ASTM D3418.

2. Chape de pneu poids lourd selon la revendication 1, dans laquelle les deux conduits de la caractéristique de chape sont espacés par une distance d'au moins 4 mm.

3. Chape de pneu poids lourd selon l'une quelconque des revendications précédentes, dans laquelle les deux conduits ont une superficie de section de conduite comprise entre 12,6 mm² et 78 mm² et dans laquelle le vide comporte une superficie de section de vide comprise entre 12,6 mm² et 78 mm².

4. Chape de pneu poids lourd selon l'une quelconque des revendications précédentes, dans laquelle les caractéristiques de chape des séries sont telles que les deux conduits de chaque caractéristique sont en décalage avec un composant de direction transversale et un composant de direction latérale de la chape.

5. Chape de pneu poids lourd selon l'une quelconque des revendications précédentes, comprenant en outre au moins une caractéristique d'incision longitudinale canalisée comprenant une pluralité de conduits s'étendant de la surface en contact avec le sol dans la direction d'épaisseur, les conduits étant espacés les uns des autres et ayant une longueur comprise entre 50 % et 100 % de l'épaisseur de la chape ; un vide étant en communication fluidique avec chacun de la pluralité des conduits, le vide s'étendant essentiellement de manière parallèle à la surface en contact avec le sol de la chape et à une certaine distance de celui-ci ; et des incisions coupées de manière longitudinale et s'étendant de la surface en contact avec le sol dans la direction d'épaisseur afin de joindre les conduits et le vide.

6. Chape de pneu poids lourd selon l'une quelconque des revendications précédentes, dans laquelle la composition de caoutchouc réticulable comprend au moins 90 phr du caoutchouc de polybutadiène.

7. Chape de pneu poids lourd selon l'une quelconque des revendications précédentes, dans laquelle la composition de caoutchouc réticulable comprend 100 phr du caoutchouc de polybutadiène.

8. Chape de pneu poids lourd selon l'une quelconque des revendications précédentes, dans laquelle la Tg du premier composant de caoutchouc est comprise entre - 80 °C et -105 °C.

9. Chape de pneu poids lourd selon l'une quelconque des revendications précédentes, dans laquelle le polybutadiène a une teneur en liaison *cis-*1,4 d'au moins 95 %.

10. Chape de pneu poids lourd selon l'une quelconque des revendications précédentes, dans laquelle le composant de caoutchouc secondaire est choisi parmi le caoutchouc naturel (NR), le polyisoprène (IR) ou des combinaisons de ceux-ci.

11. Chape de pneu poids lourd selon l'une quelconque des revendications précédentes, dans laquelle la charge de renfort est comprise entre 90 phr et 150 phr de silice.

12. Chape de pneu poids lourd selon l'une quelconque des revendications précédentes, dans laquelle la composition de caoutchouc réticulable comprend entre 50 phr et 120 phr de la résine plastifiante.

13. Chape de pneu poids lourd selon l'une quelconque des revendications précédentes, dans laquelle un tan delta max de la composition de caoutchouc est compris entre 0,2 et 0,4 tel que mesuré selon la norme ASTM D5992-96.

14. Chape de pneu poids lourd selon l'une quelconque des revendications précédentes, dans laquelle la chape est entièrement formée de la composition de caoutchouc.

15. Chape de pneu poids lourd selon l'une quelconque des revendications 1 à 13, dans laquelle la chape est divisée de manière latérale en une partie centrale et en deux parties latérales, chaque partie latérale comprenant pas plus de 25 % d'une largeur latérale de la chape, dans laquelle les parties latérales sont formées de la composition de caoutchouc et la partie centrale est formée d'une composition de caoutchouc centrale comprenant au moins 75 phr de caoutchouc naturel.
